# EUROPEAN PATENT APPLICATION

(11) **EP 4 752 377 A1**
(43) Date of publication of application: **03.06.2026**
(21) Application number: 24874420.3
(22) Date of filing: 05.09.2024
(51) Int. Cl.: F04D 29/42, F04D 29/58

(54) **FLUID MACHINE**

(30) Priority: 06.10.2023 JP 2023174261
(71) Applicant: IHI Corporation, Tokyo 135-8710 (JP)
(72) Inventor: AKAMATSU, Yosuke, Tokyo 135-8710 (JP)
(74) Representative: TBK
(86) International application number: PCT/JP2024/031898
(87) International publication number: WO 2025/074808

(57) **Abstract**

A fluid machine of the present disclosure includes a stator including a center axis, and a housing including an inner circumferential surface that is in contact with an outer circumferential surface of the stator. A groove extending along a direction including an axial component of the center axis is formed in one of the outer circumferential surface and the inner circumferential surface. The groove includes a bottom surface, and a pair of side surfaces extending from the bottom surface to the circumferential surface to be spaced farther apart from each other in the circumferential direction toward the circumferential surface. In a cross section of the groove perpendicular to the center axis, the pair of side surfaces are each represented as a linear portion including at least one straight line or curved line connecting a start point connected to the bottom surface and an end point connected to the circumferential surface. When a tangent line with an arbitrary point of the linear portion as a contact point is decomposed into a circumferential component extending in the circumferential direction from the contact point and a radial component extending in the radial direction from the contact point, the tangent line at each contact point from the start point to the end point includes at least the circumferential component among the circumferential component and the radial component.

## Description

### Technical Field

The present disclosure relates to a fluid machine.

### Background Art

In a fluid machine such as, for example, a blower or a compressor, an electric motor may be used as a drive source for an impeller. In this case, it is required to cool the electric motor that generates heat during an operation of the fluid machine. As a technology related to cooling of an electric motor, for example, a technology described in Patent Literature 1 to 3 is known. For example, in the fluid machine described in Patent Literature 1, a cooling fan is provided on a rotation shaft of an impeller, and cooling air flows inside a housing due to the cooling fan. This cooling air cools a stator which is a main heat source. Further, in this fluid machine, a cooling groove is formed between the housing and the stator, and the cooling air flowing inside the housing also flows through the cooling groove. The cooling air that has flowed through the cooling groove directly cools the stator.

### Citation List

### Patent Literature

[Patent Literature 1] PCT International Publication No. WO 2019/049202
[Patent Literature 2] Japanese Unexamined Patent Publication No. 2012-90411
[Patent Literature 3] Japanese Unexamined Patent Publication No. H8-130856

### Summary of Invention

### Technical Problem

In the fluid machine described above, the housing and the stator are fixed to each other by an interference fit such as, for example, shrink fitting, cold fitting, or press fitting. As a result, mutual stress is generated between the housing and the stator. This stress tends to concentrate on a peripheral portion of the cooling groove formed between the housing and the stator. In order to withstand such stress concentration, for example, it is conceivable to increase a thickness of the peripheral portion of the groove. However, with such a method, it is difficult to achieve weight reduction of the fluid machine.

The present disclosure describes a fluid machine capable of achieving weight reduction.

### Solution to Problem

A fluid machine according to one embodiment of the present disclosure includes a stator including a center axis, and a housing including an inner circumferential surface that is in contact with an outer circumferential surface of the stator. A groove extending along a direction including an axial component of the center axis and through which a cooling medium capable of cooling the stator passes is formed in one of the outer circumferential surface and the inner circumferential surface. The groove includes a bottom surface recessed from the circumferential surface in a radial direction perpendicular to the center axis, and a pair of side surfaces disposed at positions facing each other in a circumferential direction with the center axis as a center and extending from the bottom surface to the circumferential surface to be spaced farther apart from each other in the circumferential direction toward the circumferential surface. In a cross section of the groove perpendicular to the center axis, the pair of side surfaces are each represented as a linear portion including at least one straight line or curved line connecting a start point connected to the bottom surface and an end point connected to the circumferential surface. When a tangent line with an arbitrary point of the linear portion as a contact point is decomposed into a circumferential component extending in the circumferential direction from the contact point and a radial component extending in the radial direction from the contact point, the tangent line at each contact point from the start point to the end point includes at least the circumferential component among the circumferential component and the radial component.

### Advantageous Effects of Invention

According to some aspects of the present disclosure, a fluid machine capable of achieving weight reduction is provided.

### Brief Description of Drawings

FIG. 1 is a cross-sectional view illustrating a fluid machine according to an embodiment of the present disclosure.
FIG. 2 is a cross-sectional view along line II-II of FIG. 1.
FIG. 3 is an enlarged cross-sectional view of part A1 in FIG. 2.
FIG. 4 is an enlarged cross-sectional view of part A2 in FIG. 3.
FIG. 5 is a cross-sectional view for explaining an effect achieved by the fluid machine of FIG. 1.
FIG. 6(a) is an enlarged cross-sectional view of a part of a fluid machine according to modified example 1. FIG. 6(b) is an enlarged cross-sectional view of a part of a fluid machine according to modified example 2.
FIG. 7 is a cross-sectional view of a fluid machine according to a comparative example.
FIG. 8(a) is an enlarged cross-sectional view of a part of the fluid machine of FIG. 7.
FIG. 8(b) is a cross-sectional view of a state in which rounding is applied to a corner portion of the groove in FIG. 8(a).

### Description of Embodiments

A fluid machine according to one embodiment of the present disclosure includes a stator including a center axis, and a housing including an inner circumferential surface that is in contact with an outer circumferential surface of the stator. A groove extending along a direction including an axial component of the center axis and through which a cooling medium capable of cooling the stator passes is formed in one of the outer circumferential surface and the inner circumferential surface. The groove has a bottom surface recessed from the circumferential surface in a radial direction perpendicular to the center axis, and a pair of side surfaces disposed at positions facing each other in a circumferential direction with the center axis as a center and extending from the bottom surface to the circumferential surface to be spaced farther apart from each other in the circumferential direction toward the circumferential surface. In a cross section of the groove perpendicular to the center axis, the pair of side surfaces are each represented as a linear portion including at least one straight line or curved line connecting a start point connected to the bottom surface and an end point connected to the circumferential surface. When a tangent line with an arbitrary point of the linear portion as a contact point is decomposed into a circumferential component extending in the circumferential direction from the contact point and a radial component extending in the radial direction from the contact point, the tangent line at each contact point from the start point to the end point includes at least the circumferential component among the circumferential component and the radial component.

In the fluid machine described above, when the housing and the stator are fixed to each other by an interference fit, a large stress acts on the housing and the stator in the circumferential direction. Such a circumferential stress tends to concentrate on a portion in which a cross-sectional area at each position changes abruptly when the housing or the stator is cut along a plane in the circumferential direction at each position in the circumferential direction. For example, when a rectangular groove is formed in the housing or the stator, an abrupt change in cross-sectional area is likely to occur in a peripheral portion such as a corner portion of the groove. In contrast, in the fluid machine described above, a pair of side surfaces of the groove formed on one of an inner circumferential surface of the housing and the outer circumferential surface of the stator extend from the bottom surface to the circumferential surface to be spaced farther apart from each other in the circumferential direction toward the circumferential surface. Further, each of the side surfaces is represented as a linear portion including at least one straight line or curved line connecting a start point connected to the bottom surface and an end point connected to the circumferential surface. With an arbitrary point of the linear portion as a contact point, the tangent line at each contact point from the start point to the end point includes at least a circumferential component among the circumferential component and the radial component. In other words, the linear portion does not include a portion extending only in the radial direction from any arbitrary point thereof. Such a portion extending only in the radial direction can serve as a factor causing an abrupt change in cross-sectional area at each position when a peripheral portion of the groove is cut along a plane in the circumferential direction at each position in the circumferential direction. Therefore, if the linear portion constituting the side surface of the groove is configured not to include a portion extending only in the radial direction, an abrupt change in cross-sectional area of the peripheral portion of the groove can be suppressed. That is, a change in cross-sectional area of the peripheral portion of the groove can be made gradual. Thereby, occurrence of large stress concentration in the peripheral portion of the groove can be suppressed. As a result, it is unnecessary to make the housing or the stator excessively thick to withstand the stress concentration in the peripheral portion of the groove, and therefore weight reduction of the fluid machine can be achieved.

The circumferential surface may be the inner circumferential surface of the housing. When the housing and the stator are fixed to each other by an interference fit, a tensile stress acting particularly on the housing tends to become large. Therefore, when the groove is formed in the inner circumferential surface of the housing, large stress concentration tends to occur in the peripheral portion of the groove. In contrast, according to the above-described configuration, since occurrence of the large stress concentration in the peripheral portion of the groove can be effectively suppressed as described above, the operation and effects described above can be effectively exhibited.

A thermal expansion coefficient of the housing may be greater than a thermal expansion coefficient of the stator. In this case, when the housing and the stator are fixed by an interference fit such as, for example, shrink fitting or cold fitting, a large tensile stress tends to act on the housing due to a difference between a thermal expansion coefficient of the housing and a thermal expansion coefficient of the stator. Therefore, large stress concentration tends to occur in the peripheral portion of the groove formed on the inner circumferential surface of the housing. In contrast, according to the above-described configuration, since occurrence of the large stress concentration in a peripheral portion of the groove can be more effectively suppressed as described above, the operation and effects described above can be more effectively exhibited.

In the cross section of the groove, a distance between the end points of the pair of side surfaces in the circumferential direction may be greater than a distance between the start points of the pair of side surfaces in the circumferential direction. Since the outer circumferential surface of the stator is exposed between the end points of the pair of side surfaces of the groove, a cooling medium passing through the groove comes into contact with the outer circumferential surface of the stator. Therefore, as in the above-described configuration, if a large distance between the end points of the pair of side surfaces is secured, a large contact area of the outer circumferential surface of the stator with respect to the cooling medium, that is, a large heat transfer area, can be secured. Thereby, a cooling efficiency of the stator by the cooling medium can be increased.

In the cross section of the groove, the linear portion represented as the side surface may include a straight line extending linearly in a direction including the circumferential component. In this case, formation of the side surface of the groove becomes easier compared to a case in which the linear portion is constituted only by a complicated curved line.

A length of the circumferential component of the tangent line at each contact point from the start point to the end point may be greater than a length of the radial component of the tangent line. In this case, in the cross section of the groove, since the linear portion as the side surface extends in the circumferential direction rather than the radial direction, a change in cross-sectional area of the peripheral portion of the groove at each position in the circumferential direction can be made more gradual. Thereby, occurrence of the large stress concentration in the peripheral portion of the groove can be more effectively suppressed.

In the cross section of the groove, when a straight line connecting a center between the start points of the pair of side surfaces in the circumferential direction and the center axis is defined as a center line, the pair of side surfaces may be formed to be line-symmetrical with respect to the center line. In this case, since the stress in the peripheral portion of the groove can be uniformly distributed, occurrence of the large stress concentration in the peripheral portion of the groove can be more effectively suppressed.

A fluid machine according to another embodiment of the present disclosure includes a stator including a center axis, and a housing including an inner circumferential surface that is in contact with an outer circumferential surface of the stator. A groove extending along a direction including an axial component of the center axis and through which a cooling medium capable of cooling the stator passes is formed in one of the outer circumferential surface and the inner circumferential surface. The groove has a bottom surface recessed from the circumferential surface in a radial direction perpendicular to the center axis, and a pair of side surfaces disposed at positions facing each other in a circumferential direction with the center axis as a center and extending from the bottom surface to the circumferential surface to be spaced farther apart from each other in the circumferential direction toward the circumferential surface. In the cross section of the groove perpendicular to the center axis, the pair of side surfaces are each represented as a linear portion including at least one straight line or curved line connecting a start point connected to the bottom surface and an end point connected to the circumferential surface. When a virtual straight line connecting the start point and the end point is decomposed into the circumferential component extending in the circumferential direction from the start point and the radial component extending in the radial direction from the start point, a length of the circumferential component of the virtual straight line is greater than a length of the radial component of the virtual straight line.

Even with the fluid machine described above, the same effects as those described above are achieved. That is, according to the fluid machine described above, occurrence of large stress concentration in a peripheral portion of the groove can be suppressed. As a result, it is unnecessary to make the housing or the stator excessively thick to withstand the stress concentration in the peripheral portion of the groove, and therefore weight reduction of the fluid machine can be achieved. Further, in the fluid machine described above, a length of the circumferential component of the virtual straight line connecting the start point and the end point is greater than a length of the radial component of the virtual straight line. In this case, since the side surfaces of the groove can be configured to extend in the circumferential direction rather than the radial direction, a change in cross-sectional area of the peripheral portion of the groove at each position in the circumferential direction can be made more gradual. Thereby, occurrence of the large stress concentration in the peripheral portion of the groove can be more effectively suppressed.

Hereinafter, an embodiment of the present disclosure will be described with reference to the drawings. In the description of the drawings, the same elements will be denoted by the same reference signs, and duplicate description thereof will be omitted.

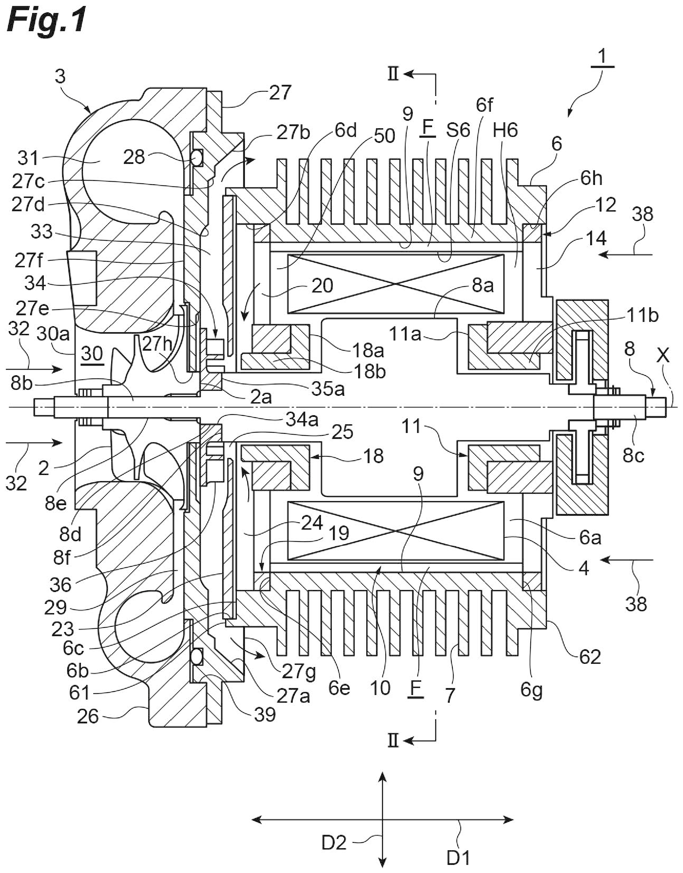

A fluid machine 1 illustrated in FIG. 1 is, for example, a centrifugal blower. The fluid machine 1 may be, for example, an air-cooled electric blower that draws in air and sends it out at a predetermined pressure. The fluid machine 1 includes an air intake port at a distal end side. The fluid machine 1 includes an impeller housing 3 in which an impeller 2 is accommodated, and an electric motor housing 6 (housing) in which an electric motor 10, which is a rotation drive unit for rotating the impeller 2, is accommodated. The electric motor 10 includes a rotor 8a fixed to the shaft 8, and a stator 4 surrounding the rotor 8a.

A heat dissipation fin 7 is formed on an outer circumferential surface of the electric motor housing 6. The electric motor housing 6 includes a first end 61 on a distal end side in an axial direction D1 and a second end 62 on a base end side. The electric motor housing 6 includes an insertion hole 6a extending in the axial direction D1 between the first end 61 and the second end 62. A shaft 8 made of, for example, stainless steel is inserted in the insertion hole 6a of the electric motor housing 6. The axial direction D1 is a direction in which a center axis X of the cylindrical stator 4 extends. The center axis X is an axis passing through a center of the stator 4. The center axis X coincides with a rotation axis of the shaft 8.

The shaft 8 is supported by a first bearing portion 18 provided in a vicinity of the first end 61 inside the electric motor housing 6, and a second bearing portion 11 provided in a vicinity of the second end 62 inside the electric motor housing 6. The shaft 8 is rotatably supported around the center axis X by the first bearing portion 18 and the second bearing portion 11.

The shaft 8 includes a first end portion 8b protruding in the axial direction D1 from the first end 61 of the electric motor housing 6, and a second end portion 8c protruding in the axial direction D1 from the second end 62 of the electric motor housing 6. The impeller 2 made of, for example, aluminum is attached to the first end portion 8b which is a protruding portion of the shaft 8. More specifically, the impeller 2 has a through hole formed along the center axis X, and the first end portion 8b of the shaft 8 is inserted into the through hole. For example, a male thread is formed on a circumferential surface of the first end portion 8b. A boss portion 2a protruding in a rearward direction is formed at a central portion on a base end side of the impeller 2.

The electric motor housing 6 includes a first cylindrical portion 6b extending from an opening on a distal end side of the insertion hole 6a toward the base end side, an annular first stepped portion 6c that is reduced in diameter from the first cylindrical portion 6b, a second cylindrical portion 6d extending from the first stepped portion 6c toward the base end side, an annular second stepped portion 6e that is reduced in diameter from the second cylindrical portion 6d, a third cylindrical portion 6f extending from the second stepped portion 6e toward the base end side, an annular third stepped portion 6g that is increased in diameter from the third cylindrical portion 6f, and a fourth cylindrical portion 6h extending from the third stepped portion 6g to the opening on the base end side of the insertion hole 6a. A diameter of the first cylindrical portion 6b is greater than a diameter of the second cylindrical portion 6d. The diameter of the second cylindrical portion 6d and a diameter of the fourth cylindrical portion 6h are each greater than a diameter of the third cylindrical portion 6f. The third cylindrical portion 6f is, for example, a portion having the smallest diameter in the insertion hole 6a of the electric motor housing 6.

The rotor 8a is fixed to a central portion of the shaft 8 in the axial direction D1. An outer diameter of the rotor 8a is greater than diameters of other portions of the shaft 8. The rotor 8a includes a magnetic field generation source such as a permanent magnet. The rotor 8a is accommodated in the electric motor housing 6. That is, both ends of the rotor 8a in the axial direction D1 are positioned between the first end 61 and the second end 62 of the electric motor housing 6.

The stator 4 is provided inside the electric motor housing 6. The stator 4 is accommodated in the third cylindrical portion 6f of the electric motor housing 6. More specifically, the stator 4 is inserted into a through hole H6 (fitting hole) that penetrates the third cylindrical portion 6f in the axial direction, and is fitted into the through hole H6. The stator 4 is spaced apart from each of the first end 61 and the second end 62 of the electric motor housing 6 in the axial direction D1. In other words, the stator 4 is shorter than a length between the first end 61 and the second end 62 in the axial direction D1. The stator 4 is shorter than, for example, a length of the third cylindrical portion 6f in the axial direction D1.

The stator 4 may include, for example, a conductive wire and a stator core which is an iron core around which the conductive wire is wound. The stator 4 is disposed around the rotor 8a. The stator 4 faces the rotor 8a with a gap therebetween. The stator 4 can be energized via wiring. When the stator 4 is energized, a rotating magnetic field is generated between the stator 4 and the rotor 8a, and the rotor 8a rotates.

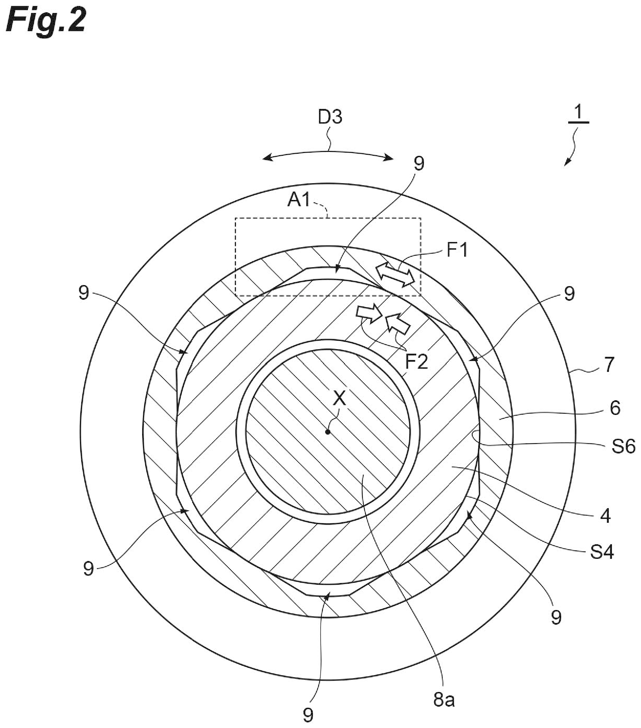

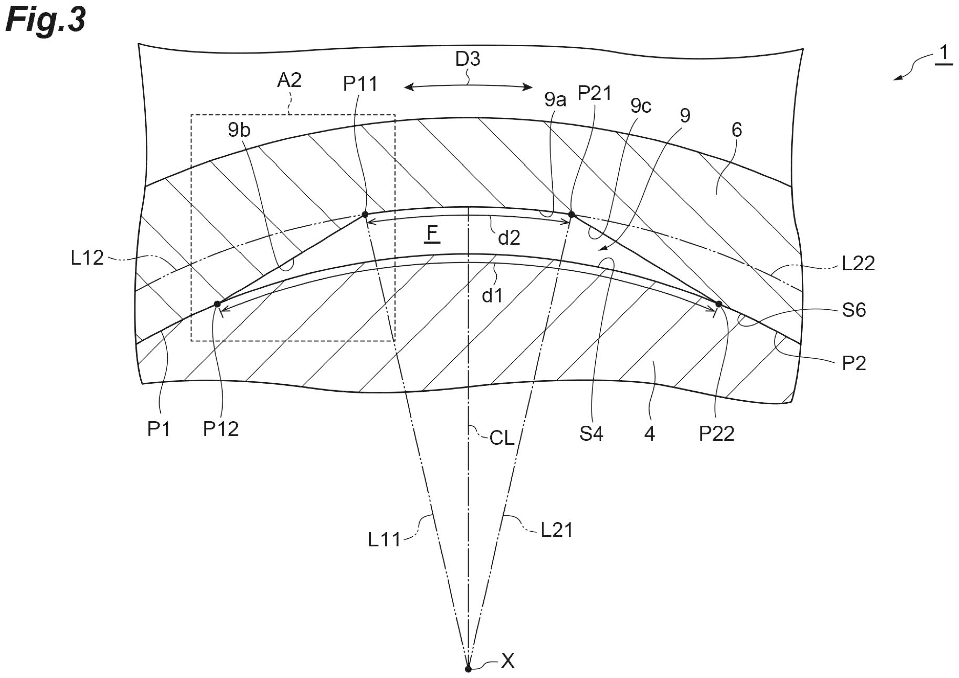

A plurality of grooves 9 are formed in the electric motor housing 6. When a direction in which each of the grooves 9 extends is decomposed into a component in the axial direction D1 and a component in a circumferential direction D3 (see FIG. 2), a direction in which the groove 9 extends includes at least the component in the axial direction D1. The groove 9 is formed, for example, in the third cylindrical portion 6f, and is connected to the second stepped portion 6e and the third stepped portion 6g. A bottom surface 9a (see FIG. 3) of the groove 9 is spaced apart in a radial direction D2 from the stator 4 provided in the third cylindrical portion 6f. The radial direction D2 is a direction perpendicular to the center axis X and orthogonal to the axial direction D1. The groove 9 forms a space extending in the axial direction D1 on an outer circumferential side of the stator 4. The groove 9 extends in the axial direction D1 over a region in which the stator 4 is provided. In other words, a length of the groove 9 in the axial direction D1 is greater than a length of the stator 4 in the axial direction D1. A more specific configuration of the groove 9 will be described later.

A portion of the shaft 8 positioned on a distal end side with respect to the rotor 8a is supported by the first bearing portion 18. A portion of the shaft 8 positioned on a base end side relative to the rotor 8a is supported by the second bearing portion 11. That is, the shaft 8 is rotatably supported by the first bearing portion 18 and the second bearing portion 11. The first bearing portion 18 includes a cylindrical support portion 18b facing the shaft 8 and supporting the shaft 8, and a flange portion 18a provided at a base end part of the support portion 18b in the axial direction D1 and protruding outward in the radial direction D2. The second bearing portion 11 includes a cylindrical support portion 11b facing the shaft 8 and supporting the shaft 8, and a flange portion 11a provided at a distal end part of the support portion 11b in the axial direction D1 and protruding outward in the radial direction D2.

Each of the first bearing portion 18 and the second bearing portion 11 is, for example, a gas bearing, and is a hydrodynamic air bearing in the present embodiment. During an operation of the fluid machine 1, an air layer is formed between the shaft 8 and the support portions 18b and 11b by high-speed rotation of the shaft 8. Therefore, the shaft 8 is supported in a state of being floated from the support portions 18b and 11b. Each of the first bearing portion 18 and the second bearing portion 11 may be, for example, a hydrostatic air bearing.

A first bearing plate 19 is fitted in the second cylindrical portion 6d of the electric motor housing 6. The first bearing plate 19 is an annular member that is fitted to the first end 61 side of the electric motor housing 6 and holds the first bearing portion 18. A second bearing plate 12 is fitted in the fourth cylindrical portion 6h of the electric motor housing 6. The second bearing plate 12 is an annular member that is fitted to the second end 62 side of the electric motor housing 6 and holds the second bearing portion 11.

An annular flow path forming plate 23 is fitted to the first cylindrical portion 6b of the electric motor housing 6. The flow path forming plate 23 is spaced apart from the first bearing plate 19 in the axial direction D1. The flow path forming plate 23 is also spaced apart from the first bearing portion 18 attached to the first bearing plate 19. That is, a space 24 extending in the radial direction D2 is formed between the flow path forming plate 23 and the first bearing plate 19. An opening 20 of the first bearing plate 19 allows communication between the insertion hole 6a of the electric motor housing 6 and the space 24.

An exhaust port 25 provided on the first end 61 side of the electric motor housing 6 is formed in the flow path forming plate 23. The exhaust port 25 communicates with the insertion hole 6a, the opening 20, and the space 24. The shaft 8 is inserted into the exhaust port 25. In the present embodiment, the exhaust port 25 is smaller than a ventilation port 14. A size of the exhaust port 25 may be changed as appropriate.

The electric motor housing 6 is constituted by the second bearing plate 12, the first bearing plate 19, the flow path forming plate 23, and the like described above. Then, a housing internal flow path 50 that allows communication between the ventilation port 14 and the exhaust port 25 is formed in the electric motor housing 6. The housing internal flow path 50 is formed in a gap between an inner wall surface of the electric motor housing 6, and the stator 4, the shaft 8, the second bearing plate 12, the second bearing portion 11, the first bearing plate 19, and the first bearing portion 18.

As illustrated in FIG. 1, the impeller 2 attached to the first end portion 8b of the shaft 8 is accommodated in the impeller housing 3. The impeller housing 3 includes an opening 30a serving as an intake port provided on a distal end side in the axial direction D1, an intake flow path 30 extending from the opening 30a to a base end side, a diffuser 29 formed in communication with the intake flow path 30 to surround the impeller 2, a scroll 31 provided on an outer circumference of the diffuser 29 and in communication with the diffuser 29, and an air outlet provided downstream of the scroll 31. The impeller housing 3 includes, for example, an impeller housing main body portion 26 and a disc-shaped closing plate 27 attached to a base end side of the impeller housing main body portion 26.

The scroll 31 is formed in the impeller housing main body portion 26. The impeller housing main body portion 26 includes the circular opening 30a of the intake flow path 30 formed on a distal end side, and a circular opening 39 facing the opening 30a in the axial direction D1, communicating with the intake flow path 30, and formed on a base end side.

The closing plate 27 is disposed on a back surface side of the impeller 2 (that is, on the rotor 8a side). The closing plate 27 is fitted, for example, to the opening 39 on the base end side of the impeller housing main body portion 26. The closing plate 27 and the impeller housing main body portion 26 are fixed to each other by, for example, a bolt or the like. The closing plate 27 includes a first surface 27f provided on the impeller 2 side and a second surface 27g provided on the electric motor housing 6 side. The first surface 27f, together with the impeller housing 3, forms the diffuser 29. An O-ring 28 is disposed on an outer circumference of the opening 39 of the impeller housing main body portion 26. The impeller housing main body portion 26 and the closing plate 27 sandwich the O-ring 28, thereby sealing a flow path of a main flow 32.

A recessed surface 27a recessed toward the impeller 2 side is formed in the second surface 27g. That is, the recessed surface 27a is disposed between the electric motor housing 6 and the impeller 2. In the axial direction D1, the first end 61 of the electric motor housing 6 is positioned on the impeller 2 side with respect to the second surface 27g of the closing plate 27. The first end 61 of the electric motor housing 6 enters a recess formed by the recessed surface 27a. In other words, the recessed surface 27a receives the first end 61 of the electric motor housing 6. The recessed surface 27a faces the electric motor housing 6 on the first end 61 side in the axial direction D1.

The first end 61 of the electric motor housing 6 and the recessed surface 27a are spaced apart from each other in the axial direction D1. An exhaust flow path 33 that allows communication between the exhaust port 25 and outside air is formed between the first end 61 of the electric motor housing 6 and the recessed surface 27a.

A circular through hole 27h penetrating in the axial direction D1 is formed at a center of the closing plate 27. The boss portion 2a provided on a back surface of the impeller 2 is inserted in the through hole 27h. That is, the boss portion 2a penetrates the closing plate 27. A length of the boss portion 2a in the axial direction is, for example, equal to a length of the through hole 27h of the closing plate 27 in the axial direction. In this manner, a part of the back surface of the impeller 2 is positioned on the electric motor housing 6 side of the recessed surface 27a.

The recessed surface 27a of the closing plate 27 includes a plurality of inclined portions. The recessed surface 27a includes, from an outer circumferential side, a first inclined portion 27b, a second inclined portion 27c, a third inclined portion 27d, and a fourth inclined portion 27e. An annular flat portion is formed between the inclined portions. The first inclined portion 27b and the second inclined portion 27c are positioned on an outer circumferential side of the first cylindrical portion 6b of the electric motor housing 6. The first inclined portion 27b extends from a distal end side (that is, the impeller 2 side) of the first end 61 of the electric motor housing 6 to a base end side (that is, the stator 4 side) in the axial direction D1. A step of the fourth inclined portion 27e is smaller than any of a step of the first inclined portion 27b, a step of the second inclined portion 27c, and a step of the third inclined portion 27d.

The recessed surface 27a formed of these inclined portions and flat portions faces the flow path forming plate 23 provided at the first end 61 of the electric motor housing 6. The exhaust flow path 33 extending in the radial direction D2 is formed between the recessed surface 27a and the flow path forming plate 23. The exhaust flow path 33 communicates with the exhaust port 25 at a center thereof and communicates with outside air at an outer circumferential end.

Screw seat portions protruding to a base end side at a predetermined angular pitch are formed on the closing plate 27. The closing plate 27 and the electric motor housing 6 are fastened with bolts or the like via the screw seat portions. Alternatively, the closing plate 27 and the electric motor housing 6 are fastened with bolts or the like while the flow path forming plate 23 is sandwiched between the screw seat portions and the electric motor housing 6. The impeller housing 3 and the electric motor housing 6 are connected to each other with the closing plate 27 interposed therebetween. Then, the exhaust flow path 33 is formed between the flow path forming plate 23 and the closing plate 27.

A distal end-side intermediate-diameter portion 8d is formed on a distal end side of the shaft 8 with respect to the flow path forming plate 23. A cooling fan 34 made of, for example, aluminum is fitted and inserted in the distal end-side intermediate-diameter portion 8d. The cooling fan 34 is provided inside the exhaust flow path 33 to face the exhaust port 25. The cooling fan 34 includes a boss portion 35a into which the distal end-side intermediate-diameter portion 8d of the shaft 8 is inserted. An insertion hole 34a is formed in the boss portion 35a, and the distal end-side intermediate-diameter portion 8d is inserted into the insertion hole 34a. On the other hand, the shaft 8 has an annular stepped portion 8f formed to be continuous with the distal end-side intermediate-diameter portion 8d and have a diameter greater than that of the distal end-side intermediate-diameter portion 8d. The stepped portion 8f is positioned between the electric motor housing 6 and the impeller 2, and faces the boss portion 2a of the impeller 2.

A distal end-side small-diameter portion 8e is formed on a distal end side of the distal end-side intermediate-diameter portion 8d. The distal end-side small-diameter portion 8e corresponds to the first end portion 8b described above. The impeller 2 is fitted and inserted into the distal end-side small-diameter portion 8e. A fastening nut is screwed on a distal end side of the impeller 2. When the fastening nut is tightened, an axial force is generated, and the impeller 2 and the cooling fan 34 are attached to the shaft 8. In other words, a pressing force against the boss portion 2a of the impeller 2 and the cooling fan 34 is generated from the fastening nut. That is, the boss portion 35a of the cooling fan 34 and the impeller 2 are sandwiched between the stepped portion 8f of the shaft 8 and the fastening nut.

The impeller 2 presses the boss portion 35a of the cooling fan 34 with the boss portion 2a which is a part of the back surface. A gap is formed between a hub portion of the impeller 2 and the cooling fan 34, and the above-described closing plate 27 is positioned in the gap. The boss portion 35a of the cooling fan 34 is positioned on an inner circumferential side relative to the flow path forming plate 23. A diameter of the cooling fan 34 is greater than a diameter of the exhaust port 25 of the flow path forming plate 23. In other words, the exhaust port 25 is positioned inward of an outer end of a blade portion 36 of the cooling fan 34.

Next, a configuration of the plurality of grooves 9 formed between the electric motor housing 6 and the stator 4 will be described in detail with reference to FIGS. 2 to 4.

FIG. 2 illustrates a cross section of the fluid machine 1 in a plane perpendicular to the center axis X. As illustrated in FIG. 2, the plurality of grooves 9 are formed in an inner circumferential surface S6 of the electric motor housing 6. A portion of the inner circumferential surface S6 in which the plurality of grooves 9 are not formed is in contact with an outer circumferential surface S4 of the stator 4. The electric motor housing 6 is fixed to the stator 4 by an interference fit such as, for example, shrink fitting, cold fitting, or press fitting. The electric motor housing 6 is formed of, for example, aluminum. The stator 4 is formed of, for example, iron. In this case, a thermal expansion coefficient of the electric motor housing 6 is greater than a thermal expansion coefficient of the stator 4.

Therefore, when the electric motor housing 6 and the stator 4 are fixed by an interference fit such as shrink fitting or cold fitting, a mutual stress is generated in the electric motor housing 6 and the stator 4 due to a difference in thermal expansion coefficient between the electric motor housing 6 and the stator 4. Specifically, since the electric motor housing 6 is in a swollen state in the radial direction D2 (see FIG. 1), a tensile stress F1 in the circumferential direction D3 acts on the electric motor housing 6. On the other hand, since the stator 4 is in a contracted state in the radial direction D2, a compressive stress F2 in the circumferential direction D3 acts on the stator 4.

The grooves 9 between the electric motor housing 6 and the stator 4 are aligned in the circumferential direction D3 on the inner circumferential surface S6. The grooves 9 are aligned, for example, at equal intervals in the circumferential direction D3 with a predetermined angular pitch on the inner circumferential surface S6. In the example illustrated in FIG. 2, for example, six grooves 9 are formed at an angular pitch of 60°. Each of the grooves 9, for example, extends in a straight line in the axial direction D1. Each groove 9 may extend in a direction inclined with respect to the axial direction D1.

As illustrated in FIG. 3, the groove 9 includes the bottom surface 9a recessed outward in the radial direction D2 from the inner circumferential surface S6 and a pair of side surfaces 9b and 9c connecting the bottom surface 9a and the inner circumferential surface S6. The bottom surface 9a faces the outer circumferential surface S4 of the stator 4 in the radial direction D2. That is, a gap is formed between the bottom surface 9a and the outer circumferential surface S4. The side surfaces 9b and 9c are respectively disposed on both sides of the bottom surface 9a in the circumferential direction D3, and face each other in the circumferential direction D3. The side surfaces 9b and 9c extend from the bottom surface 9a to the inner circumferential surface S6 to be spaced farther apart from each other from the bottom surface 9a toward the inner circumferential surface S6. Accordingly, a distance between the side surface 9b and the side surface 9c in the circumferential direction D3 increases toward the inner circumferential surface S6 from the bottom surface 9a. In the cross section of FIG. 3, when a straight line connecting a center of the bottom surface 9a extending in the circumferential direction D3 and the center axis X is defined as a center line CL, the side surfaces 9b and 9c are formed, for example, to be line-symmetrical with respect to the center line CL.

In the cross section of FIG. 3, the groove 9 has, for example, a trapezoidal shape in which a width in the circumferential direction D3 increases from the bottom surface 9a toward the inner circumferential surface S6. As illustrated in FIG. 3, when a connection point between the side surface 9b and the bottom surface 9a is defined as a start point P11, a connection point between the side surface 9b and the inner circumferential surface S6 is defined as an end point P12, a connection point between the side surface 9c and the bottom surface 9a is defined as a start point P21, and a connection point between the side surface 9c and the inner circumferential surface S6 is defined as an end point P22, a distance d1 in the circumferential direction D3 between the end point P12 of the side surface 9b and the end point P22 of the side surface 9c is greater than a distance d2 in the circumferential direction D3 between the start point P11 of the side surface 9b and the start point P21 of the side surface 9c. The distance d1 may be, for example, at least twice or at least three times the distance d2.

As illustrated in FIG. 3, when a radial line L11, to be described later, is drawn from the start point P11 to the center axis X, the side surface 9b is inclined with respect to the radial line L11 so that it is positioned further toward a side opposite to the center line CL with respect to the radial line L11 from the start point P11 toward the end point P12. Similarly, when a radial line L21, to be described later, is drawn from the start point P21 to the center axis X, the side surface 9c is inclined with respect to the radial line L21 so that it is positioned further toward a side opposite to the center line CL with respect to the radial line L21 from the start point P21 toward the end point P22. "The side surfaces 9b and 9c extend from the bottom surface 9a to the inner circumferential surface S6 to be spaced farther apart from each other from the bottom surface 9a toward the inner circumferential surface S6" means that the side surfaces 9b and 9c are inclined so that they are respectively positioned further toward sides opposite to the center line CL with respect to the radial lines L11 and L21 from the bottom surface 9a toward the inner circumferential surface S6. Therefore, "the side surfaces 9b and 9c extend from the bottom surface 9a to the inner circumferential surface S6 to be spaced farther apart from each other from the bottom surface 9a toward the inner circumferential surface S6" does not include that the side surfaces 9b and 9c are inclined to be positioned closer to the center line CL with respect to the radial lines L11 and L21 from the bottom surface 9a toward the inner circumferential surface S6, nor does it include that the side surfaces 9b and 9c respectively extend along the radial lines L11 and L21.

An internal region of the groove 9 surrounded by the bottom surface 9a, the side surface 9b, the side surface 9c, and the inner circumferential surface S6 is configured as a coolant flow path F through which the cooling air 38 (cooling medium) passes. As illustrated in FIG. 1, the coolant flow path F communicates with the housing internal flow path 50. Therefore, when the cooling air 38 flows through the housing internal flow path 50, the cooling air 38 also flows through the coolant flow path F in the groove 9. At this time, the cooling air 38 cools the stator 4 by directly removing heat from the stator 4. As a flow path cross-sectional area of the coolant flow path F increases, a cooling efficiency of the stator 4 by the cooling air 38 improves. On the other hand, a contact area between the inner circumferential surface S6 of the electric motor housing 6 and the outer circumferential surface S4 of the stator 4 decreases as the flow path cross-sectional area of the coolant flow path F increases, thereby reducing a resistance against a stress acting on those surfaces (that is, the inner circumferential surface S6 and the outer circumferential surface S4). Therefore, the flow path cross-sectional area of the coolant flow path F is determined by adjusting a depth of the groove 9, a contact area between the electric motor housing 6 and the stator 4, and the like, taking into account a balance between a cooling efficiency of the stator 4 and a strength of the electric motor housing 6.

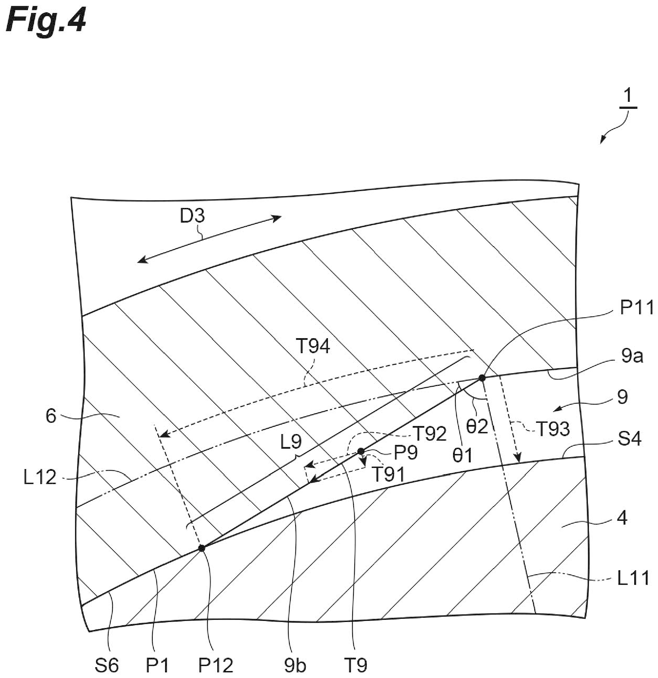

A configuration of the side surfaces 9b and 9c of the groove 9 will be described in more detail with reference to FIG. 4. As described above, since the side surfaces 9b and 9c are line-symmetrical with respect to the center line CL, they have corresponding shapes to each other. Therefore, a configuration of the side surface 9b will be described in detail below as a representative of the side surfaces 9b and 9c.

In the cross section of FIG. 4, the side surface 9b is represented as a linear portion L9 including at least one straight line or curved line connecting the start point P11 connected to the bottom surface 9a and the end point P12 connected to the inner circumferential surface S6. In the present embodiment, a case in which the linear portion L9 as the side surface 9b is represented only by a single straight line connecting the start point P11 and the end point P12 is exemplified. As illustrated in FIG. 4, if a tangent line T9 at an arbitrary contact point P9 of the linear portion L9 is decomposed into a radial component T91 extending in the radial direction D2 from the contact point P9 and a circumferential component T92 extending in the circumferential direction D3 from the contact point P9, the tangent line T9 at each contact point P9 from the start point P11 to the end point P12 includes at least the circumferential component T92 among the circumferential component T92 and the radial component T91. In the example illustrated in FIG. 4, a length of the circumferential component T92 of the tangent line T9 is greater than that of the radial component T91 of the tangent line T9. For example, the length of the circumferential component T92 of the tangent line T9 may be at least twice or at least three times the length of the radial component T91 of the tangent line T9.

The fact that the tangent line T9 at each contact point P9 of the linear portion L9 includes at least the circumferential component T92 means that the linear portion L9 does not include a straight line or curved line that extends only in the radial direction D2 from each contact point P9. As in the present embodiment, in a case in which the linear portion L9 is constituted only by a single straight line, the linear portion L9 extends from the start point P11 to the end point P12 in a direction inclined at least with respect to the radial direction D2. More specifically, when a straight line passing through the start point P11 and extending in the radial direction D2 is defined as the radial line L11, and a straight line passing through the start point P11 and extending in the circumferential direction D3 is defined as a circumferential line L12, the linear portion L9 extends from the start point P11 in a direction inclined with respect to both the radial line L11 and the circumferential line L12.

In the present embodiment, the linear portion L9 extends from the start point P11 in a direction inclined closer to the circumferential line L12 than to the radial line L11. That is, an angle θ1 of the linear portion L9 with respect to the circumferential line L12 is smaller than an angle θ2 of the linear portion L9 with respect to the radial line L11. The fact that a length of the circumferential component T92 of the tangent line T9 is greater than that of the radial component T91 of the tangent line T9 means that the linear portion L9 extends in a direction inclined closer to the circumferential line L12 than to the radial line L11. As described above, since the side surface 9c has a shape symmetrical to the side surface 9b, the side surface 9c extends from the start point P21 in a direction inclined closer to the circumferential line L22 than to the radial line L21, corresponding to the side surface 9b (see FIG. 3).

Considering a case in which the linear portion L9 has a complicated configuration including a plurality of straight lines or curved lines, a relationship between the start point P11 and the end point P12 can be described as follows. When a virtual straight line connecting the start point P11 and the end point P12 is drawn, the virtual straight line is decomposed into a radial component T93 extending in the radial direction D2 from the start point P11 and a circumferential component T94 extending in the circumferential direction D3 from the start point P11. However, in FIG. 4, the virtual straight line connecting the start point P11 and the end point P12 can be regarded as the linear portion L9. In this case, a length of the circumferential component T94 is greater than a length of the radial component T93. The linear portion L9 connecting the start point P11 and the end point P12 can thus be more easily configured to extend in a direction inclined closer to the circumferential line L12 than to the radial line L11. The same relationship as that between the start point P11 and the end point P12 holds for a relationship between the start point P21 and the end point P22 as.

The configuration of the side surfaces 9b and 9c of the groove 9 can also be described as follows from another perspective.

In the cross section of FIG. 3, the bottom surface 9a, the side surface 9b, the side surface 9c, and the outer circumferential surface S4 can be regarded as a plurality of boundary lines forming the groove 9. The outer circumferential surface S4 (first boundary line) is represented as a curved line connecting a contact portion P1 (first contact portion) and a contact portion P2 (second contact portion). The contact portions P1 and P2 are contact portions of the outer circumferential surface S4 with respect to the inner circumferential surface S6, and are portions positioned on both sides in the circumferential direction D3 with the groove 9 interposed therebetween. The side surface 9b (second boundary line) is represented as a straight line extending to be positioned further toward one side in the circumferential direction D3 from the contact portion P1 toward the outside in the radial direction D2. The side surface 9c (third boundary line) is represented as a straight line extending to be positioned further toward the other side in the circumferential direction D3 from the contact portion P2 toward the outside in the radial direction D2.

In this case, when a radius of curvature of the side surface 9b is expressed as r, a position of the side surface 9b is expressed as an angle θ, and an average inclination is expressed as (dr/rdθ), the average inclination of the side surface 9b is smaller than 1. If it is assumed that the side surface 9b includes a circular chamfered portion at a connection portion with the bottom surface 9a, the average inclination of the chamfered portion corresponds to 1. An average radius of curvature of the side surface 9b is greater than a difference between an average inner diameter and an average outer diameter of the side surface 9b. When expressed in the same manner as the side surface 9b, an average inclination of the side surface 9c is smaller than 1. An average radius of curvature of the side surface 9c is greater than a difference between an average inner diameter and an average outer diameter of the side surface 9c. This means that the side surface 9b and side surface 9c are connected by a line with a gentler inclination rather than by a simple circle.

Next, an operation of the fluid machine 1 will be described. The fluid machine 1 may be used, for example, for blowing or suctioning air. When the fluid machine 1 is used for blowing, an object to be blown is provided downstream of an outlet of the main flow 32 (that is, on a downstream side). When the fluid machine 1 is used for suctioning, an object to be suctioned is provided upstream of a suction port (opening 30a) of the main flow 32 (that is, on an upstream side).

When electric power is supplied to the stator 4, a rotating magnetic field is generated between the stator 4 and the rotor 8a of the shaft 8, thereby causing the shaft 8 to rotate. The impeller 2 rotates in accordance with the rotation of the shaft 8, and the rotation of the impeller 2 causes the main flow 32 to be suctioned into the impeller housing 3. When the fluid machine 1 is used for suction, air is suctioned from a predetermined object to be suctioned. When the fluid machine 1 is used for blowing, the main flow 32 suctioned into the impeller housing 3 is blown to a predetermined object to be blown through the diffuser 29 and the scroll 31.

During an operation of the fluid machine 1, the cooling fan 34 also rotates together with the impeller 2. Due to the rotation of the cooling fan 34, the inside of the electric motor housing 6 is suctioned through the exhaust port 25. Since the inside of the electric motor housing 6 is at a negative pressure, outside air is suctioned into the inside of the electric motor housing 6 as the cooling air 38 through the ventilation port 14.

The cooling air 38 suctioned in through the ventilation port 14 flows through the housing internal flow path 50 formed in the electric motor housing 6 and between the stator 4 and the rotor 8a. When the cooling air 38 flows through the housing internal flow path 50, the cooling air 38 can also flow through the grooves 9 formed in the inner circumferential surface S6 of the electric motor housing 6.

The cooling air 38 that has flowed through the inside of the electric motor housing 6 reaches the space 24 via the opening 20. The cooling air 38 which has reached the space 24 is deflected toward the center by the flow path forming plate 23. The cooling air 38 deflected toward the center is exhausted to the outside of the electric motor housing 6 through the exhaust port 25.

The cooling air 38 exhausted from the exhaust port 25 and suctioned into the cooling fan 34 is exhausted outward in the radial direction D2, flows through the exhaust flow path 33, is guided by the recessed surface 27a including the plurality of inclined portions, and is exhausted to the outside of the fluid machine 1.

During an operation of the fluid machine 1, a heat source such as the stator 4 generates heat. The stator 4, which is a heat source, is cooled by the cooling air 38 flowing through the inside of the electric motor housing 6. Further, the stator 4 is cooled by the heat dissipation fin 7 that exchanges heat with outside air. Further, the stator 4 is directly cooled by the cooling air 38 that has flowed through the groove 9. As heat sources other than the stator 4, examples include the rotor 8a containing a permanent magnet, the first bearing portion 18, the second bearing portion 11, an air gap, and the like. The air gap refers to a flow of air in a rotation direction of the rotor 8a that can occur between the rotor 8a and the stator 4. The air gap causes a windage loss. In the present embodiment, all of the above-described heat sources are cooled directly or indirectly.

An operation and effects of the fluid machine 1 according to the present embodiment described above will be described together with problems of a comparative example.

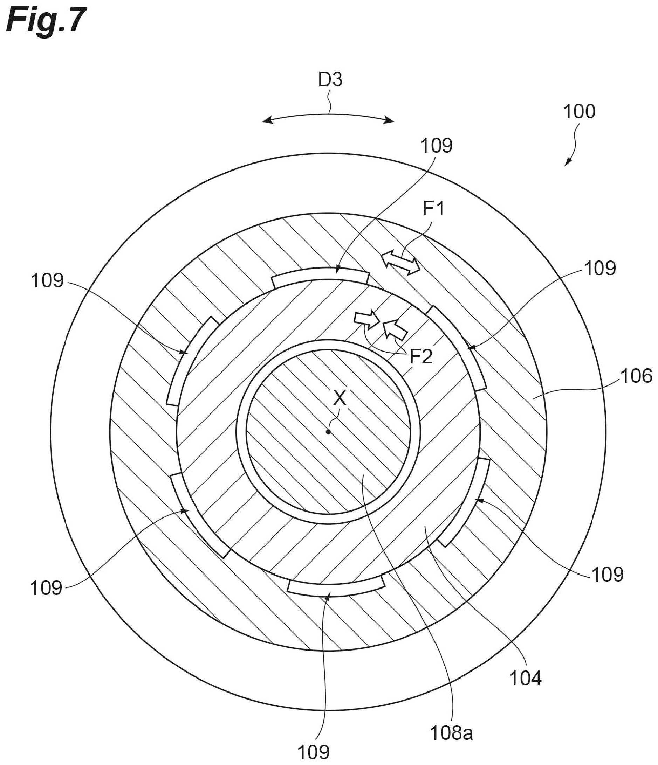

FIG. 7 illustrates a fluid machine 100 according to a comparative example. A difference between the fluid machine 1 according to the present embodiment and the fluid machine 100 lies in a shape of a groove 109 between an electric motor housing 106 and a stator 104. In the fluid machine 100, a cross-sectional shape of the groove 109 formed in the electric motor housing 106 is rectangular. When the electric motor housing 106 and the stator 104 are fixed to each other by an interference fit, the tensile stress F1 in the circumferential direction D3 acts on the electric motor housing 106, and the compressive stress F2 in the circumferential direction D3 acts on the stator 104. As in the fluid machine 100, when the groove 109 is formed in the electric motor housing 106, the tensile stress F1 acting on the electric motor housing 106 tends to concentrate on a peripheral portion of the groove 109. The reason for this is that the tensile stress F1 tends to concentrate on a portion in which a change in cross-sectional area at each position of the electric motor housing 106 is abrupt when the electric motor housing 106 is cut at each position in the circumferential direction D3 with a plane perpendicular to the circumferential direction D3.

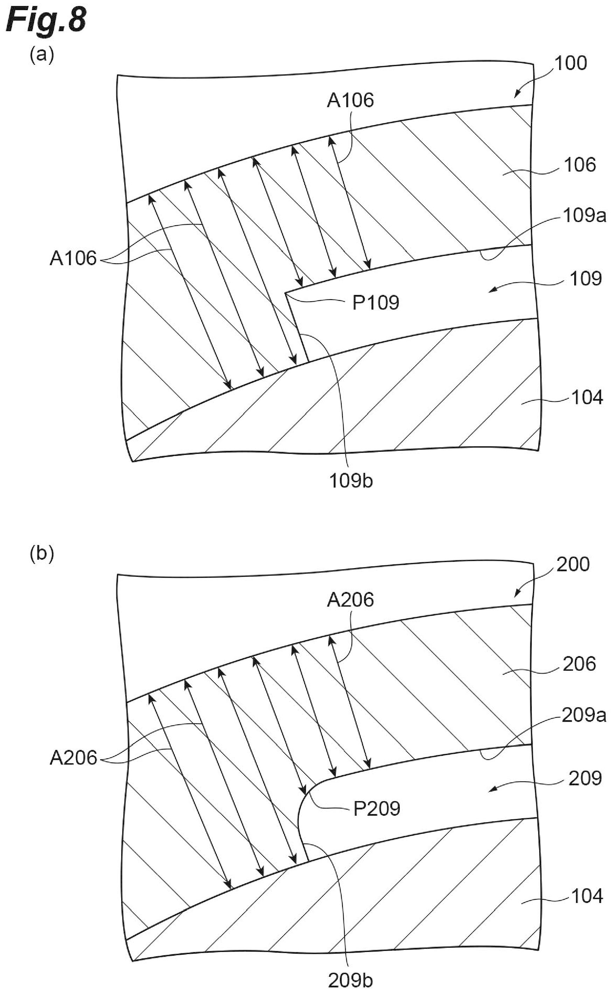

The change in cross-sectional area of the electric motor housing 106 at each position in the circumferential direction D3 can be represented as a change in length of an arrow A106 at each position in the circumferential direction D3 in the cross section of FIG. 8(a). The change in the length of the arrow A106 at each position in the circumferential direction D3 can also be said to indicate a thickness of the electric motor housing 106 at each position in the radial direction D2. As in the fluid machine 100, when the rectangular groove 109 is formed in the electric motor housing 106, a side surface 109b of the groove 109 is formed perpendicular to a bottom surface 109a of the groove 109 and extends linearly only in the radial direction D2 perpendicular to the circumferential direction D3.

In the cross section of FIG. 8(a), when such a side surface 109b extending linearly only in the radial direction D2 is present, the side surface 109b causes a portion in which a length of the arrow A106 is changed abruptly. That is, the side surface 109b causes a portion of the electric motor housing 106 in which the cross-sectional area is changed abruptly at each position in the circumferential direction D3. In this case, large stress concentration occurs in a peripheral portion of the groove 109 such as a corner portion P109 between the side surface 109b and the bottom surface 109a. In order to withstand such stress concentration in the peripheral portion of the groove 109, it is conceivable to increase a thickness of the electric motor housing 106 as illustrated in FIG. 8(a).

However, when the electric motor housing 106 is made thicker in this way, the fluid machine 100 becomes larger in size, and a weight of the fluid machine 100 increases. Particularly, in a low-temperature environment such as, for example, -30°C, an interference margin of the interference fit tends to increase due to a difference in thermal expansion coefficients between the electric motor housing 106 and the stator 104. Alternatively, for greater torque transmission, it is also conceivable to increase the interference margin. When the interference margin is increased, the tensile stress F1 acting on the electric motor housing 106 increases, and the stress concentration in the peripheral portion of the groove 109 also increases. If the thickness of the electric motor housing 106 is further increased to withstand such stress concentration, a weight of the fluid machine 100 further increases. Therefore, it is difficult to achieve weight reduction in the fluid machine 100.

FIG. 8(b) illustrates a case in which rounding is applied to the corner portion P109 of the groove 109 in FIG. 8(a). That is, in a fluid machine 200 of FIG. 8(b), an rounded portion P209 is formed in a groove 209 of an electric motor housing 206. As a method for alleviating the stress concentration, it is conceivable to perform rounding on a corner portion of the groove 209 in this manner. In the cross section of FIG. 8(b), the rounded portion P209 is represented as a curved line extending between a side surface 209b and a bottom surface 209a of the groove 209 while curving to connect the side surface 209b and the bottom surface 209a.

In the fluid machine 200 of FIG. 8(b), stress concentration in a peripheral portion of the groove 209 can be alleviated compared to the fluid machine 100 of FIG. 8(a). However, even in the fluid machine 200, since the side surface 209b extending only in the radial direction D2 still exists, the side surface 209b causes a portion in which a length of an arrow A206 changes abruptly. That is, the side surface 209b causes a portion in which a cross-sectional area of the electric motor housing 206 changes abruptly at each position in the circumferential direction D3. Therefore, even in the fluid machine 200, it is difficult to suppress stress concentration on the peripheral portion of the groove 209.

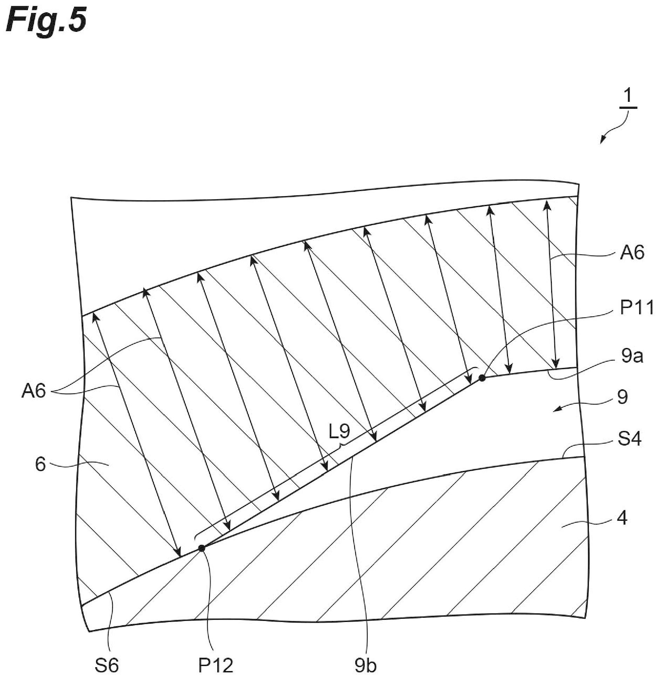

In contrast, according to the fluid machine 1 of the present embodiment, the linear portion L9 represented as the side surface 9b of the groove 9 does not include a portion extending only in the radial direction D2 as described above. Therefore, when the electric motor housing 6 is cut with a plane perpendicular to the circumferential direction D3 at each position in the circumferential direction D3, it is possible to suppress an abrupt change in cross-sectional area of the electric motor housing 6 at each position. That is, a change in cross-sectional area of a peripheral portion of the groove 9 can be made gradual. As illustrated in FIG. 5, it can be seen that, in the peripheral portion of the groove 9, a length of an arrow A6 at each position in the circumferential direction D3 changes gradually without changing abruptly. Therefore, in the fluid machine 1, it is possible to suppress occurrence of large stress concentration on the peripheral portion of the groove 9. As a result, since it is not necessary to make the electric motor housing 6 excessively thick to withstand the stress concentration on the peripheral portion of the groove 9, it is possible to suppress an increase in size of the fluid machine 1 and achieve weight reduction of the fluid machine 1. As a result, even in a low-temperature environment such as -30°C, it is possible to use a lightweight fluid machine 1 in which a thickness of the electric motor housing 6 is made as thin as possible. Further, it is possible to achieve large torque transmission by using such a fluid machine 1.

In the present embodiment, the groove 9 is formed in the inner circumferential surface S6 of the electric motor housing 6. When the electric motor housing 6 and the stator 4 are fixed to each other by an interference fit, the tensile stress F1 acting particularly on the electric motor housing 6 tends to increase. Therefore, when the groove 9 is formed in the inner circumferential surface S6 of the electric motor housing 6, a stress tends to concentrate on a peripheral portion of the groove 9. In contrast, according to the configuration of the present embodiment, as described above, since occurrence of large stress concentration on a peripheral portion of the groove 9 can be effectively suppressed, the operation and effects described above can be effectively exhibited.

A thermal expansion coefficient of the electric motor housing 6 may be greater than a thermal expansion coefficient of the stator 4. In this case, when the electric motor housing 6 and the stator 4 are fixed by an interference fit such as, for example, shrink fitting or cold fitting, the large tensile stress F1 tends to act on the electric motor housing 6 due to a difference between the thermal expansion coefficient of the electric motor housing 6 and the thermal expansion coefficient of the stator 4, and a stress tends to concentrate on a peripheral portion of the groove 9 formed in the inner circumferential surface S6 of the electric motor housing 6. In contrast, according to the above-described configuration, as described above, since occurrence of the large stress concentration on a peripheral portion of the groove 9 can be effectively suppressed, the operation and effects described above can be effectively exhibited.

In the present embodiment, in a cross section of the groove 9, the distance d1 between the end point P12 of the side surface 9b and the end point P22 of the side surface 9c in the circumferential direction D3 is greater than the distance d2 between the start point P11 of the side surface 9b and the start point P21 of the side surface 9c in the circumferential direction D3. Since the outer circumferential surface S4 of the stator 4 is exposed between the end point P12 of the side surface 9b and the end point P22 of the side surface 9c, the cooling air 38 passing through the groove 9 comes into contact with the outer circumferential surface S4 of the stator 4. Therefore, as in the above-described configuration, if the distance d1 between the end point P12 of the side surface 9b and the end point P22 of the side surface 9c is largely secured, a large contact area of the outer circumferential surface S4 of the stator 4 with respect to the cooling air 38, that is, a large heat transfer area, can be secured. Thereby, a cooling efficiency of the stator 4 by the cooling air 38 can be increased.

In the present embodiment, in the cross section of the groove 9, the linear portion L9 represented as the side surface 9b extends linearly in a direction including the circumferential component T92. In this case, formation of the side surface 9b of the groove 9 is easier than when the linear portion L9 is constituted only by a complicated curved line.

In the present embodiment, a length of the circumferential component T92 of the tangent line T9 at each contact point P9 from the start point P11 to the end point P12 is greater than a length of the radial component T91 of the tangent line T9. In this case, in the cross section of the groove 9, since the linear portion L9 as the side surface 9b extends in the circumferential direction D3 rather than the radial direction D2, a change in the peripheral portion of the groove 9 at each position in the circumferential direction D3 can be made more gradual. Thereby, occurrence of large stress concentration in the peripheral portion of the groove 9 can be more effectively suppressed.

In the present embodiment, the side surfaces 9b and 9c of the groove 9 are formed to be line-symmetrical with respect to the center line CL. In this case, since the stress in the peripheral portion of the groove 9 can be uniformly distributed, occurrence of large stress concentration in the peripheral portion of the groove 9 can be more effectively suppressed.

The present disclosure can be implemented in various forms, including the above-described embodiment, with various modifications and improvements made on the basis of the knowledge of those skilled in the art. Further, it is also possible to configure a modified example of the embodiment by utilizing the technical matters described in the above-described embodiment.

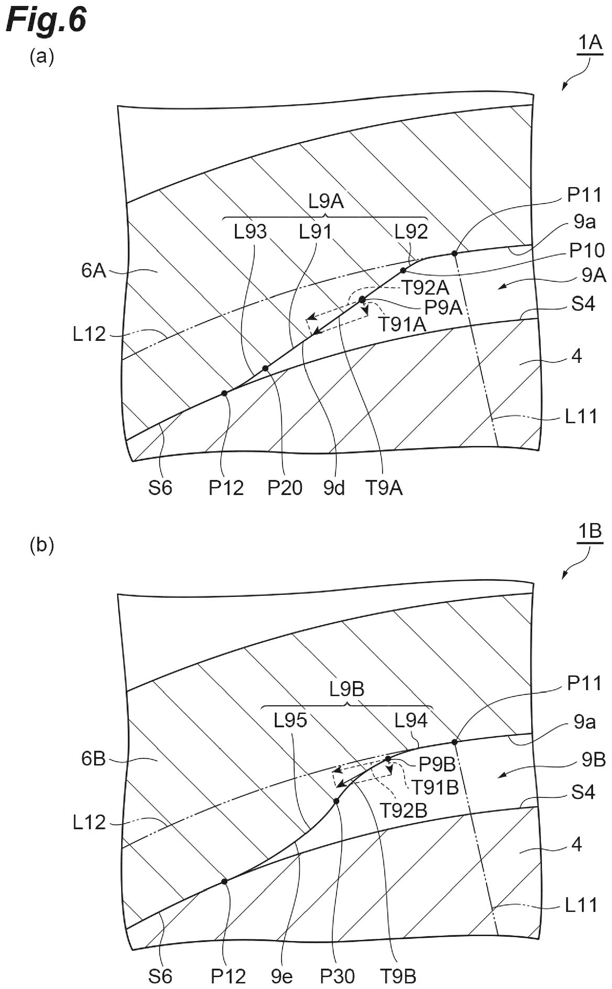

FIG. 6(a) illustrates an enlarged cross section of a peripheral portion of a groove 9A formed in an electric motor housing 6A of a fluid machine 1A according to modified example 1. In the cross section of FIG. 6(a), a linear portion L9A represented as a side surface 9d of the groove 9A includes only a straight line L91 extending in a direction inclined with respect to both a radial line L11 and a circumferential line L12, a first curved line L92 connecting the start point P11 and the straight line L91, and a second curved line L93 connecting the straight line L91 and the end point P12. FIG. 6(a) illustrates a first connection point P10 at which the first curved line L92 and the straight line L91 are connected, and a second connection point P20 at which the straight line L91 and the second curved line L93 are connected.

The first curved line L92 extends in an arc from the start point P11 to the first connection point P10 while curving to bulge to the outer circumferential surface S4 side of the stator 4. The second curved line L93 extends in an arc from the second connection point P20 to the end point P12 while curving to bulge to a side opposite to the outer circumferential surface S4. A tangent line T9A at each contact point P9A of the linear portion L9A includes at least a circumferential component T92A among a radial component T91A and the circumferential component T92A. Therefore, the linear portion L9A does not include any portion extending only in the radial direction D2 from each contact point P9A.

FIG. 6(b) illustrates an enlarged cross section of a groove 9B formed in an electric motor housing 6B of a fluid machine 1B according to modified example 2. In the cross section of FIG. 6(b), a linear portion L9B illustrated as a side surface 9e of the groove 9B includes only a first curved line L94 and a second curved line L95. Therefore, the linear portion L9B does not include a straight line. FIG. 6(b) illustrates a connection point P30 at which the first curved line L94 and the second curved line L95 are connected. The first curved line L94 extends in an arc from the start point P11 to the connection point P30 while curving to bulge to the outer circumferential surface S4 side of the stator 4. The second curved line L95 extends in an arc from the connection point P30 to the end point P12 while curving to bulge to a side opposite to the outer circumferential surface S4. A tangent line T9B at each contact point P9B of the linear portion L9B includes at least a circumferential component T92B among a radial component T91B and the circumferential component T92B. Therefore, the linear portion L9B does not include any portion extending only in the radial direction D2 from each contact point P9B.

Even in the forms illustrated in FIGS. 6(a) and 6(b), as in the above-described embodiment, abrupt changes in cross-sectional areas of the electric motor housings 6A and 6B can be suppressed, and therefore stress concentration on peripheral portions of the grooves 9A and 9B can be suppressed. As a result, since it is not necessary to make the electric motor housings 6A and 6B excessively thick to withstand the stress concentration on the peripheral portions of the grooves 9A and 9B, it is possible to suppress an increase in size of the fluid machines 1A and 1B and achieve weight reduction of the fluid machines 1A and 1B.

In the above-described embodiment, a case in which the groove 9 through which the cooling air 38 passes is formed in the inner circumferential surface S6 of the electric motor housing 6 has been described. However, the groove 9 may be formed in the outer circumferential surface S4 of the stator 4. In this case, the pair of side surfaces 9b and 9c of the groove 9 may be inclined to be spaced farther apart from each other in the circumferential direction D3 from the bottom surface 9a toward the outer circumferential surface S4. In the embodiment described above, the cooling air 38 has been exemplified as a cooling medium. However, the cooling medium may be other than the cooling air 38. The cooling medium may be a liquid such as, for example, cooling water. In the above-described embodiment, a case in which the cooling fan 34 attached to the shaft 8 is provided has been described. However, as long as the cooling medium is such that a cooling medium from the outside passes through the groove 9, the cooling fan 34 does not necessarily have to be provided. In the above-described embodiment, a case in which the fluid machine of the present disclosure is a centrifugal blower has been exemplified. However, the fluid machine of the present disclosure may be a centrifugal compressor or may be an axial-flow type blower or compressor.

### <Additional statement>

The present disclosure is [1] "A fluid machine comprising a stator including a center axis, and
a housing including an inner circumferential surface that is in contact with an outer circumferential surface of the stator, in which
a groove extending along a direction including an axial component of the center axis and through which a cooling medium capable of cooling the stator passes is formed in one of the outer circumferential surface and the inner circumferential surface,
wherein the groove includes:
   a bottom surface recessed from the circumferential surface in a radial direction perpendicular to the center axis; and
   a pair of side surfaces disposed at positions facing each other in a circumferential direction with the center axis as a center and extending from the bottom surface to the circumferential surface to be spaced farther apart from each other in the circumferential direction toward the circumferential surface,
   wherein in a cross section of the groove perpendicular to the center axis, the pair of side surfaces are each represented as a linear portion including at least one straight line or curved line connecting a start point connected to the bottom surface and an end point connected to the circumferential surface, and
   wherein when a tangent line with an arbitrary point of the linear portion as a contact point is decomposed into a circumferential component extending in the circumferential direction from the contact point and a radial component extending in the radial direction from the contact point, the tangent line at each contact point from the start point to the end point includes at least the circumferential component among the circumferential component and the radial component".

The present disclosure is [2] "the fluid machine according to [1] described above, in which the circumferential surface is the inner circumferential surface of the housing".

The present disclosure is [3] "the fluid machine according to [2] described above, in which a thermal expansion coefficient of the housing is greater than a thermal expansion coefficient of the stator".

The present disclosure is [4] "the fluid machine according to [2] or [3] described above, in which in the cross section of the groove, a distance between the end points of the pair of side surfaces in the circumferential direction is greater than a distance between the start points of the pair of side surfaces in the circumferential direction".

The present disclosure is [5] "the fluid machine according to any one of [1] to [4] described above, in which in the cross section of the groove, the linear portion represented as the side surface includes a straight line extending linearly in a direction including the circumferential component".

The present disclosure is [6] "the fluid machine according to any one of [1] to [5] described above, in which a length of the circumferential component of the tangent line at each contact point from the start point to the end point is greater than a length of the radial component of the tangent line".

The present disclosure is [7] "the fluid machine according to any one of [1] to [6] described above, in which in the cross section of the groove, when a straight line connecting a center between the start points of the pair of side surfaces in the circumferential direction and the center axis is defined as a center line, the pair of side surfaces are formed to be line-symmetrical with respect to the center line".

The present disclosure is [8] "the fluid machine according to claim 1 described above including a stator including a center axis, and
a housing including an inner circumferential surface that is in contact with an outer circumferential surface of the stator, in which
a groove extending in a direction including an axial component of the center axis and through which a cooling medium capable of cooling the stator passes is formed in one of the outer circumferential surface and the inner circumferential surface,
wherein the groove includes:
   a bottom surface recessed from the circumferential surface in a radial direction perpendicular to the center axis; and
   a pair of side surfaces disposed at positions facing each other in a circumferential direction with the center axis as a center and extending from the bottom surface to the circumferential surface to be spaced farther apart from each other in the circumferential direction toward the circumferential surface,
   wherein in a cross section of the groove perpendicular to the center axis, the pair of side surfaces are each represented as a linear portion including at least one straight line or curved line connecting a start point connected to the bottom surface and an end point connected to the circumferential surface, and
   wherein when a virtual straight line connecting the start point and the end point is decomposed into a circumferential component extending in the circumferential direction from the start point and a radial component extending in the radial direction from the start point, a length of the circumferential component of the virtual straight line is greater than a length of the radial component of the virtual straight line".

### Reference Signs List

1, 1A, 1B Fluid machine
4 Stator
6, 6A, 6B Electric motor housing (housing)
8 Shaft
8a Rotor
9, 9A, 9B Groove
9a Bottom surface
9b, 9d, 9e Side surface (second boundary line)
9c Side surface (third boundary line)
10 Electric motor
38 Cooling air (cooling medium)
CL Center line
D1 Axial direction
D2 Radial direction
D3 Circumferential direction
d1, d2 Distance
F Coolant flow path
L9, L9A, L9B Linear portion
L91 Straight line
P1 Contact portion (first contact portion)
P2 Contact portion (second contact portion)
P9, P9A, P9B Contact point
P11, P21 Start point
P12, P22 End point
S4 Outer circumferential surface (first boundary line)
S6 Inner circumferential surface
T9, T9A, T9B Tangent line
T91, T91A, T91B Radial component
T92, T92A, T92B Circumferential component
T93 Radial component
T94 Circumferential component
X Center axis

## Claims

1. A fluid machine comprising:
a stator including a center axis; and
a housing including an inner circumferential surface in contact with an outer circumferential surface of the stator,
wherein a groove extending along a direction including an axial component of the center axis and through which a cooling medium capable of cooling the stator passes is formed in one of the outer circumferential surface and the inner circumferential surface,
wherein the groove includes:
a bottom surface recessed from the circumferential surface in a radial direction perpendicular to the center axis; and
a pair of side surfaces disposed at positions facing each other in a circumferential direction with the center axis as a center and extending from the bottom surface to the circumferential surface to be spaced farther apart from each other in the circumferential direction toward the circumferential surface,
wherein in a cross section of the groove perpendicular to the center axis, the pair of side surfaces are each represented as a linear portion including at least one straight line or curved line connecting a start point connected to the bottom surface and an end point connected to the circumferential surface, and
wherein when a tangent line with an arbitrary point of the linear portion as a contact point is decomposed into a circumferential component extending in the circumferential direction from the contact point and a radial component extending in the radial direction from the contact point, the tangent line at each contact point from the start point to the end point includes at least the circumferential component among the circumferential component and the radial component.

2. The fluid machine according to claim 1, wherein the circumferential surface is the inner circumferential surface of the housing.

3. The fluid machine according to claim 2, wherein a thermal expansion coefficient of the housing is greater than a thermal expansion coefficient of the stator.

4. The fluid machine according to claim 2, wherein in the cross section of the groove, a distance between the end points of the pair of side surfaces in the circumferential direction is greater than a distance between the start points of the pair of side surfaces in the circumferential direction.

5. The fluid machine according to any one of claims 1 to 4, wherein in the cross section of the groove, the linear portion represented as the side surface includes a straight line extending linearly in a direction including the circumferential component.

6. The fluid machine according to any one of claims 1 to 4, wherein a length of the circumferential component of the tangent line at each contact point from the start point to the end point is greater than a length of the radial component of the tangent line.

7. The fluid machine according to any one of claims 1 to 4, wherein in the cross section of the groove, when a straight line connecting a center between the start points of the pair of side surfaces in the circumferential direction and the center axis is defined as a center line, the pair of side surfaces are formed to be line-symmetrical with respect to the center line

8. The fluid machine according to claim 1 comprising:
a stator including a center axis; and
a housing including an inner circumferential surface in contact with an outer circumferential surface of the stator,
wherein a groove extending along a direction including an axial component of the center axis and through which a cooling medium capable of cooling the stator passes is formed in one of the outer circumferential surface and the inner circumferential surface,
wherein the groove includes:
a bottom surface recessed from the circumferential surface in a radial direction perpendicular to the center axis; and
a pair of side surfaces disposed at positions facing each other in a circumferential direction with the center axis as a center and extending from the bottom surface to the circumferential surface to be spaced farther apart from each other in the circumferential direction toward the circumferential surface,
wherein in a cross section of the groove perpendicular to the center axis, the pair of side surfaces are each represented as a linear portion including at least one straight line or curved line connecting a start point connected to the bottom surface and an end point connected to the circumferential surface, and
wherein when a virtual straight line connecting the start point and the end point is decomposed into a circumferential component extending in the circumferential direction from the start point and a radial component extending in the radial direction from the start point, a length of the circumferential component of the virtual straight line is greater than a length of the radial component of the virtual straight line.
